# EUROPÄISCHE PATENTSCHRIFT

(11) **EP 1 441 160 B1**
(45) Veröffentlichungstag und Bekanntmachung des Hinweises auf die Patenterteilung: **26.07.2006**
(21) Anmeldenummer: 04001573.7
(22) Anmeldetag: 26.01.2004
(51) Int. Cl.: F16K 27/00, F24D 3/10, B60H 1/00

(54) **Ventilgruppe**
Valve groupe
Ensemble de clapets

(30) Priorität: 27.01.2003 DE 20301204 U
(43) Veröffentlichungstag der Anmeldung: 28.07.2004
(73) Patentinhaber: Bürkert Werke GmbH & Co. KG, 74653 Ingelfingen (DE)
(72) Erfinder: Lotha, Hartmuth, 74635 Kupferzell (DE)
(74) Vertreter: Degwert, Hartmut

(56) Entgegenhaltungen:
- EP-A- 0 109 032
- EP-A- 1 059 491
- WO-A-00/20784
- DE-A- 10 054 868
- FR-A- 2 579 289

## Beschreibung

Die Erfindung betrifft eine Ventilgruppe mit mehreren nebeneinander angeordneten Ventilen. Sie eignet sich besonders zur Steuerung der Wasserverteilung in Heiz- und Kühlkreisläufen von Nutzfahrzeugen wie in Bussen.

Ventilgruppen mit mehreren Ventilen sind bereits bekannt. In DE 100 21 518 A1 und in DE 100 54 868 A1 werden Ventilanordnungen vorgeschlagen, bei denen modular verschiedene Ventileinheiten je nach Bedarf zusammengesetzt werden können. In diesen Ventilgruppen ist zumindest ein Strömungskanal vorgesehen.

WO 00/20784 beschreibt ein modulares Ventilsystem mit einem Zulauf und einem Ablauf, mit denen ein Verbraucher verbunden ist. Dabei steuert eine Ventil einen Fluidfluß über den Zulauf zu dem Verbraucher und weiter zurück zu dem Ablauf über ein erstes Ventilmittel. Alternativ, d.h. wenn das erste Ventilmittel geschlossen ist, steuert das Ventil anhand eines zweiten Ventilmittels den Fluidfluss direkt über einen Bypass-Kanal in den Ablauf.

FR 2 579 289 enthält ein Fluid-Verteilsystem, das Verbraucheranschlüsse über Ventile mit einem Fluid versorgt, das durch Versorgungskanäle fließt. Dabei umfaßt FR 2 579 289 keinen Bypass-Kanal gemäß obiger Darstellung.

Die vorliegende Erfindung stellt eine Ventilgruppe mit mehreren nebeneinander angeordneten Ventilen zur Verfügung. Alle Ventile sind in einem gemeinsamen Ventilblock angeordnet, in dem sich ein Zulaufkanal und ein Rücklaufkanal befinden. Sowohl von dem Zulaufkanal als auch von dem Rücklaufkanal sind Verbraucherkanäle abgezweigt, die zu Verbraucheranschlüssen an der Außenseite des Ventilblocks führen. Die Verbraucherkanäle werden durch je ein im Ventilblock integriertes Ventil gesteuert und der Zulaufkanal und der Rücklaufkanal sind durch einen Bypass-Kanal im Innern des Ventilblocks miteinander verbunden. Der Fluidfluss durch den Bypass-Kanal wird unabhängig von einem Fluidfluss durch den Verbraucherkanal gestannt.

Durch den gemeinsamen Ventilblock sind keine Zwischendichtungen nötig, und die Anzahl benötigter Einzelteile wird reduziert. Die Verbraucherkanäle können durch das jeweils zugeordnete integrierte Ventil gesteuert werden. Der integrierte Bypass gewährleistet einen kontrollierten Wasserdurchsatz, im Fall des Einsatzes zur Busklimatisierung z.B. sowohl zu den Wärmetauschern als auch zur Zusatzheizung. Dieser Bypass ist geschlossen, wenn die Wasserpumpe einer zusätzlichen Heizung nicht arbeitet. Wird keine Wärme benötigt, so bewirkt dies eine Begrenzung der Wärme, die von der Ventilgruppe in das Leitungssystem und in das Innere des Fahrzeuges geleitet wird. Wird auf der anderen Seite Wärme benötigt, so bewirkt das Schließen des Bypasses, daß der volle Wasserdruck für den ausgewählten Heizkreis verfügbar bleibt. Die Integration des Bypass-Kanals in den Ventilblock begrenzt die Gefahr, daß Luft in die verschiedenen Heizkreise eindringt, und erlaubt es, Luft einfach zu entfernen, wenn die Heizkreisläufe in Betrieb sind.

In einer bevorzugten Ausführungsform wird der Bypass-Kanal durch ein in den Ventilblock integriertes Bypass-Ventil gesteuert. Die Justage dieses Bypass-Ventils kann frontseitig durch Einstellung oder Tausch eines Federeinsatzes erfolgen. Mit dieser Einstellung wird bei geschlossenen Prozeßventilen ein definierter minimaler Durchfluß gewährleistet, der damit eine Überhitzung der Zusatzheizung und übermäßige Wasserschläge verhindert.

In einer weiteren bevorzugten Ausführungsform liegen der Zulaufkanal und der Rücklaufkanal parallel nebeneinander im quaderförmigen Ventilblock, den sie vollständig durchqueren. Vom Zulaufkanal und dem Rücklaufkanal zweigen die Verbraucherkanäle rechtwinklig ab. Der Zulaufkanal und der Rücklaufkanal sind jeweils an einem Ende durch einen Blindflansch abgeschlossen und am anderen Ende mit einem Schlauchanschluß versehen.

Vorzugweise ist der Ventilblock als Aluminium-Gußteil ausgeführt. Durch diese Ausführung als gegossener Block sind keine Zwischendichtungen zwischen den einzelnen Ventilen notwendig. In einer bevorzugten Ausführungsform weisen die Ventile der Verbraucherkanäle und das Bypass-Ventil einen an einer Bohrung des Ventilblocks ausgebildeten Dichtsitz auf und einen in der Bohrung beweglich aufgenommenen Schließkörper, der über einen Betätigungsschaft mit einem an einer Außenfläche des Ventilblocks angebrachten Ventilantrieb verbunden ist.

In einer weiteren Ausführungsform sind die Ventile mit elektromagnetischen Ventilantrieben ausgestattet. Der Ventilantrieb ist wahlweise offen oder zu montierbar. Versehen mit einem elektromagnetischen Ventilantrieb, können die Vorteile der Regelventiltechnik genutzt werden, wie beispielsweise ein Rampenanfahren beim Öffnen und Schließen. Es ist auch die Schnelligkeit der standardmäßigen S/W-Prozeßventiltechnik gegeben. Es können gängige Steuerungscontroller eingesetzt werden. In einer bevorzugten Ausführungsform, werden die Ventilantriebe mit Pulsansteuerung betrieben. Je nach Aufbau der Pilotventile (einfach gegen Feder oder zweifach gegen Feder), ist es vorgesehen diese Prozessventile, sowohl als AUF/ZU Ventile, als auch als Regelventile mit stetiger Positionierung zu betreiben. Durch entsprechende Federvorspannung ist es möglich, das Ventil nach Applikationserfordernissen drucklos geschlossen oder geöffnet zu steuern.

In einer Ausführungsform münden die Verbraucherkanäle auf mehreren Außenflächen des quaderförmigen Ventilblocks in Anschlußöffnungen, die bedarfsweise durch Blindflansche verschlossen oder mit Schlauchanschlüssen versehen werden. Mit einer derartigen Ausführung des Ventilblocks ist eine einfache Installation und ein einfacher Betrieb gegeben.

Die Besonderheiten der erfindungsgemäßen Ventilgruppe ergeben sich aus der nachfolgenden Beschreibung anhand der beigefügten Abbildungen. Diese Abbildungen zeigen:
Fig. 1 den Schaltplan eines Wasserkreislaufs mit einer erfindungsgemäßen Ventilgruppe;
Fig. 2 eine Perspektivansicht der Ventilgruppe;
Fig. 3 einen Längsschnitt durch den quaderförmigen Ventilblock der Ventilgruppe; und
Fig. 4 einen Querschnitt durch den Ventilblock.

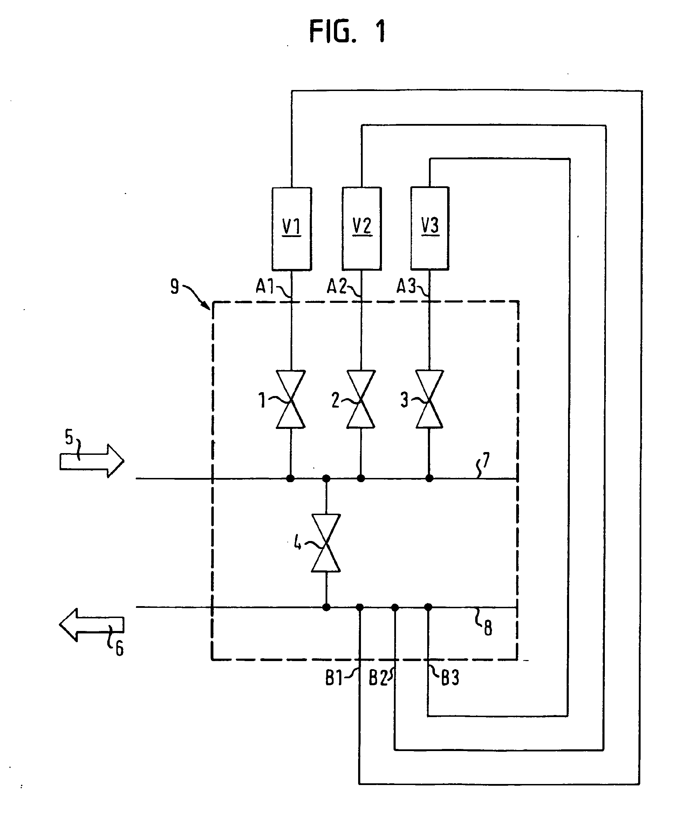

Bei der in den Figuren 1 - 4 gezeigten Ausführungsform ist der Ventilblock mit drei Ventilen für drei Verbraucher und mit einem Bypass-Ventil bestückt. Ebenso können 2- oder 4-fach-Ausführungen realisiert werden.

Figur 1 zeigt in Form eines Schaltplans einen Ventilblock 9 mit drei Ventilen 1, 2, 3 und einem Bypass-Ventil 4. Der Ventilblock 9 enthält einen Zulaufkanal 7 und einen Rücklaufkanal 8. Aus dem Ventilblock 9 hinaus führen die Verbraucheranschlüsse A1, A2 und A3, in ihn hinein führen die Verbraucheranschlüsse B1, B2 und B3. Der Schaltplan zeigt drei Verbraucher V1, V2 und V3.

In den Zulaufkanal 7 strömt, durch einen Pfeil 5 angedeutet, Flüssigkeit in den Ventilblock 9 ein. Je nach Stellung der Ventile 1, 2 und 3 wird diese Flüssigkeit zu den Verbrauchern V1, V2 und V3 geleitet. Nach Durchströmen der Verbraucher, kehrt die Flüssigkeit über die Verbraucheranschlüsse B1, B2 bzw. B3 zurück in den Ventilblock 9, genauer in den Rücklaufkanal 8. Die Flüssigkeit verläßt über Rücklaufkanal 8 den Ventilblock 9, angedeutet durch einen Pfeil 6. Bei der Flüssigkeit kann es sich beispielsweise um warmes Wasser für verschiedene Heizkreisläufe V1, V2 und V3 handeln. Das Bypass-Ventil 4 liegt zwischen Zulaufkanal 7 und Rücklaufkanal 8. Übersteigt der Druck im Zulaufkanal 7 einen voreingestellten Wert, so öffnet dieses Ventil 4, und die Flüssigkeit kann direkt über den Rücklaufkanal 8 ablaufen. Damit wird bei geschlossenen Prozeßventilen ein definierter minimaler Durchfluß gewährleistet, der damit eine Überhitzung der Zusatzheizung und übermäßige Wasserschläge verhindert.

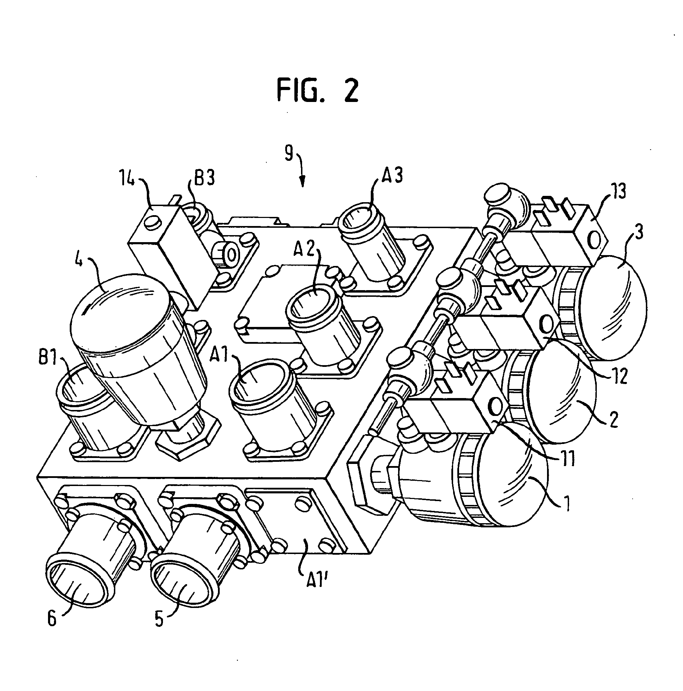

Die perspektivische Ansicht von Figur 2 zeigt eine bevorzugte Ausführungsform des Ventilblocks 9. Ventilblock 9 ist quaderförmig und auf seinen Oberflächen mit den Ventilen 1, 2, 3 und 4, und den Verbraucheranschlüssen A1-A3 und B1-B3, optionalen Verbraucheranschlüssen und Anschlüssen für Zulaufkanal 7 und Rücklaufkanal 8 versehen. Vorne sind die Anschlüsse 5 und 6 für Zulauf und Rücklauf gezeigt, daneben liegt ein optionaler, mit einem Blindflansch verschlossener, Verbraucheranschluß A1'. Für die Prozeßanbindung stehen verschiedene Anschlußformen wie Schlauchanschluß TU18 bis TU38 gerade und 90° winklig oder Gewindeanschluß zur Verfügung. Dies gilt auch für die Anschlüsse A1, A2, A3, B1, B2 und B3. Figur 2 zeigt beispielsweise verschiedene Durchmesser für die Verbraucheranschlüsse A1- A3. Auf der rechten Seite sind die Ventile 1, 2 und 3 mit den jeweils dazugehörigen elektromagnetischen Ventilantrieben 11, 12 und 13 zu sehen.

Auf der Oberseite des Ventilblocks 9 liegen rechts die Verbraucheranschlüsse A1, A2, A3, an die die Verbraucher angeschlossen werden können. Diese Nutzungsausgänge können auch bedarfsweise durch Blindflansche verschlossen werden, wenn ein optionaler Verbraucheranschluß an einer anderen Seite des Quaders benutzt werden soll. Auf der Oberseite des Ventilblocks 9 befindet sich auch Bypass-Ventil 4. Dieses federvorgespannte Rückschlagventil verbindet Zulaufkanal 7 mit Rücklaufkanal 8 über einen Bypass-Kanal 10 im Innern des Ventilblocks 9. Die Justage des Rückschlagventils erfolgt durch Einstellung oder Tausch des Federeinsatzes. Das Bypass-Ventil 4 ist mit einem elektromagnetischen Ventilantrieb 14 versehen. In der perspektivischen Darstellung nur ansatzweise zu erkennen sind die Verbraucheranschlüsse B1, B2 und B3, über die die rücklaufende Flüssigkeit in Rücklaufkanal 8 eingespeist wird.

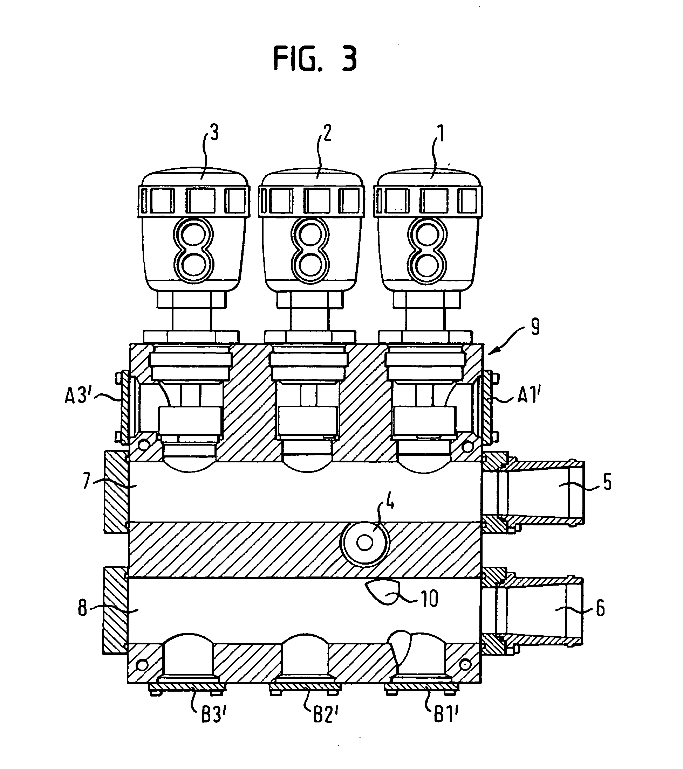

In einem Längsschnitt durch Ventilblock 9 in Figur 3 sind die Ventile 1, 2, 3, Zulauf 5, Rücklauf 6 sowie Zulaufkanal 7 und Rücklaufkanal 8 zu erkennen. Ebenfalls eingezeichnet ist Bypass-Ventil 4. Die optionalen Verbraucheranschlüsse A1', B1', B2', B3', und A3' sind jeweils durch Blindflansche verschlossen. Dies entspricht der perspektivischen Darstellung von Figur 2, in der der Blindflansch auf dem optionalen Verbraucherausgang A1' zu erkennen ist. Sowohl Zulaufkanal 7 als auch Rücklaufkanal 8 sind an ihrem den Anschlüssen 5 und 6 entgegengesetzten Ende jeweils durch einen Blindflansch verschlossen. Ansatzweise zu erkennen ist Bypass-Kanal 10, der durch Bypass-Ventil 4 geöffnet oder geschlossen werden kann.

In 5 einströmende Flüssigkeit wird je nach Regelstellung der Ventile 1, 2 und 3 in die Verbraucherkanäle abgezweigt. Diese münden in die Verbraucheranschlüsse A1, A2 bzw. A3, in einen der optionalen Verbraucheranschlüsse A1', A2', A3' oder auch in weitere nicht dargestellte optionale Anschlüsse ein. In Figur 2 nicht dargestellt sind die angeschlossenen Verbraucher. Nach Durchströmen des jeweiligen Verbrauchers kommt die Flüssigkeit über die Verbraucheranschlüsse B1, B2 bzw. B3 oder über einen der optionalen Anschlüsse B1', B2' oder B3' oder über weitere nicht dargestellte optionale Verbraucheranschlüsse zurück in den Rücklaufkanal 8. Sind alle Ventile 1, 2, 3 geschlossen und steigt der Druck im Zulaufkanal 7, so öffnet Bypass-Ventil 4 und über Bypass-Kanal 10 kann die bei . 5 einströmende Flüssigkeit über Anschluß 6 wieder ausströmen.

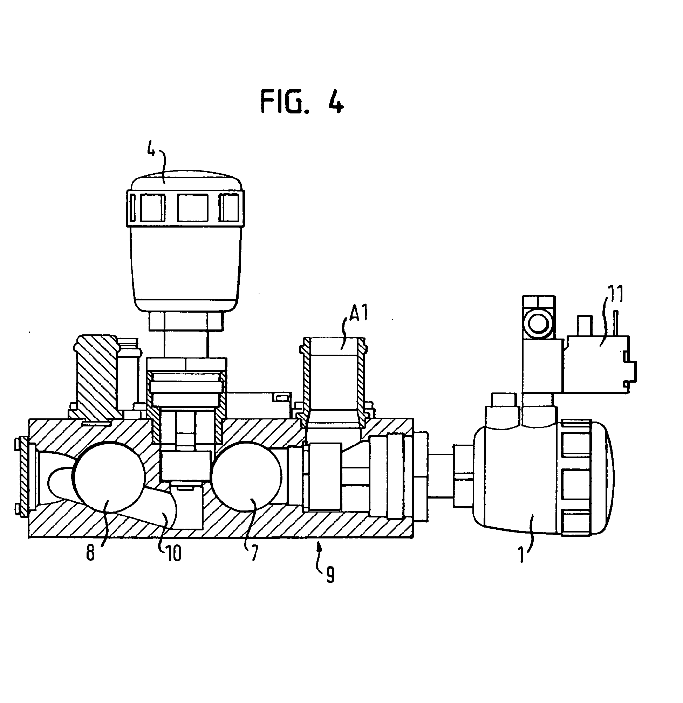

Im Querschnitt in Figur 4, der durch Ventil 1 und Bypass-Ventil 4 gelegt ist, ist der Bypass-Kanal 10, der den Zulaufkanal 7 mit dem Rücklaufkanal 8 verbindet, dargestellt.

## Patentansprüche

1. Ventilgruppe mit mehreren nebeneinander angeordneten Ventilen (1, 2, 3), wobei in einem allen Ventilen gemeinsamen Ventilblock (9) ein Zulaufkanal (7) und ein Rücklaufkanal (8) angeordnet sind, daß von dem Zulaufkanal (7) und von dem Rücklaufkanal (8) Verbraucherkanäle abgezweigt sind, die zu Verbraucheranschlüssen (A1, A2, A3, B1, B2, B3) an der Außenseite des Ventilblocks (9) führen, daß die Verbraucherkanäle durch je ein im Ventilblock (9) integriertes Ventil (1, 2, 3) gesteuert sind und daß der Zulaufkanal (7) und der Rücklaufkanal (8) durch einen Bypass-Kanal im Innern des Ventilblocks verbunden sind, **dadurch gekennzeichnet, daß** ein Fluidfluss durch den Bypass-Kanal unabhängig von einem Fluidfluss durch den Verbraucherkanal steuerbar ist.

2. Ventilgruppe nach Anspruch 1, **dadurch gekennzeichnet, daß** der Bypass-Kanal durch ein in den Ventilblock (9) integriertes Bypass-Ventil (4) gesteuert ist.

3. Ventilgruppe nach einem der vorstehenden Ansprüche, **dadurch gekennzeichnet, daß** der Zulaufkanal (7) und der Rücklaufkanal (8) parallel nebeneinander den quaderförmigen Ventilblock (9) vollständig durchqueren und die Verbraucherkanäle rechtwinklig abgezweigt sind.

4. Ventilgruppe nach Anspruch 3, **dadurch gekennzeichnet, daß** der Zulaufkanal (7) und der Rücklaufkanal (8) jeweils an einem Ende durch einen Blindflansch abgeschlossen und am anderen Ende mit einem Schlauchanschluß versehen sind.

5. Ventilgruppe nach Anspruch 3 oder 4, **dadurch gekennzeichnet, daß** der Ventilblock (9) ein Aluminium-Gußteil ist.

6. Ventilgruppe nach einem der vorstehenden Ansprüche, **dadurch gekennzeichnet, daß** die Ventile (1, 2, 3) der Verbraucherkanäle jeweils einen an einer Bohrung des Ventilblocks (9) ausgebildeten Dichtsitz und einen in der Bohrung beweglich aufgenommenen Schließkörper aufweisen, der über einen Betätigungsschaft mit einem an einer Außenfläche des Ventilblocks angebrachten Ventilantrieb verbunden ist.

7. Ventilgruppe nach einem der vorstehenden Ansprüche, **dadurch gekennzeichnet, daß** das Bypass-Ventil (4) einen an einer Bohrung des Ventilblocks ausgebildeten Dichtsitz und einen in der Bohrung beweglich aufgenommenen Schließkörper aufweist, der über einen Betätigungsschaft mit einem an einer Außenfläche des Ventilblocks (9) angebrachten Ventilantrieb verbunden ist.

8. Ventilgruppe nach einem der vorstehenden Ansprüche, **dadurch gekennzeichnet, daß** die Ventile elektromagnetische Ventilantriebe aufweisen.

9. Ventilgruppe nach Anspruch 8, **dadurch gekennzeichnet, daß** die Ventilantriebe mit Pulsansteuerung betrieben werden können.

10. Ventilgruppe nach einem der vorstehenden Ansprüche, **dadurch gekennzeichnet, daß** die Verbraucherkanäle auf mehreren Außenflächen des quaderförmigen Ventilblocks in Anschlußöffnungen münden, die bedarfsweise durch Blindflansche verschlossen oder mit Schlauchanschlüssen versehen sind.

## Claims

1. A valve group comprising a plurality of valves (1, 2, 3) arranged next to one another, an intake duct (7) and a return duct (8) being arranged in a valve block (9) that is common to all valves, consumer ducts being branched off from the intake duct (7) and from the return duct (8), the consumer ducts leading to consumer connections (A1, A2, A3, B1, B2, B3) on the outside of the valve block (9) and each being controlled by a respective valve (1, 2, 3) integrated in the valve block (9), and the intake duct (7) and the return duct (8) communicating by a bypass duct inside the valve block, **characterized in that** a fluid flow through the bypass duct is controllable independently of a fluid flow through the consumer duct.

2. The valve group according to claim 1, **characterized in that** the bypass duct is controlled by a bypass valve (4) integrated in the valve block (9).

3. The valve group according to either of the preceding claims, **characterized in that** the intake duct (7) and the return duct (8) completely pass through the right-parallelepipedal valve block (9) parallel next to each other and the consumer ducts are branched off at right angles.

4. The valve group according to claim 3, **characterized in that** the intake duct (7) and the return duct (8) are each closed off at one end by a blind flange and are each provided with a hose connection at the other end.

5. The valve group according to claim 3 or 4, **characterized in that** the valve block (9) is a cast aluminium part.

6. The valve group according to any of the preceding claims, **characterized in that** the valves (1, 2, 3) of the consumer ducts each have a valve seat formed on a borehole of the valve block (9) and a closing body movably accommodated in the borehole, the closing body being connected, by means of an actuating stem, with a valve drive mounted to an outer surface of the valve block.

7. The valve group according to any of the preceding claims, **characterized in that** the bypass valve (4) has a valve seat formed on a borehole of the valve block and a closing body movably accommodated in the borehole, the closing body being connected, by means of an actuating stem, with a valve drive mounted to an outer surface of the valve block (9).

8. The valve group according to any of the preceding claims, **characterized in that** the valves include electromagnetic valve drives.

9. The valve group according to claim 8, **characterized in that** the valve drives can be operated pulse-controlled.

10. The valve group according to any of the preceding claims, **characterized in that** on a plurality of outer surfaces of the right-parallelepipedal valve block, the consumer ducts open into connecting ports which are closed off by blind flanges or are provided with hose connections, as required.

## Revendications

1. Groupe de valves comprenant plusieurs valves juxtaposées (1, 2, 3), un canal d'admission (7) et un canal de retour (8) étant ménagés dans un bloc de valves (9) commun à toutes les valves, des canaux d'usagers qui mènent à des raccordements d'usagers (A1, A2, A3, B1, 82, B3) sur la face externe du bloc de valves (9) étant dérivés du canal d'admission (7) et du canal de retour (8), les canaux d'usagers étant chacun commandés par une valve (1, 2, 3) intégrée au bloc de valves (9) et le canal d'admission (7) et le canal de retour (8) étant raccordés par un canal de dérivation à l'intérieur du bloc de valves, **caractérisé en ce qu'**un flux de fluide traversant le canal de dérivation peut être commandé indépendamment d'un flux de fluide traversant le canal d'usagers.

2. Groupe de valves selon la revendication 1, **caractérisé en ce que** le canal de dérivation est commandé par une valve de dérivation (4) intégrée au bloc de valves (9).

3. Groupe de valves selon l'une quelconque des revendications précédentes, **caractérisé en ce que** le canal d'admission (7) et le canal de retour (8) traversent entièrement, parallèlement l'un à côté de l'autre, le bloc de valves de forme parallélépipédique (9) et les canaux d'usagers sont dérivés à angle droit.

4. Groupe de valves selon la revendication 3, **caractérisé en ce que** le canal d'admission (7) et le canal de retour (8) sont chacun fermés à une extrémité par une bride aveugle et pourvus à l'autre extrémité d'un raccord de tuyau.

5. Groupe de valves selon la revendication 3 ou 4, **caractérisé en ce que** le bloc de valves (9) est une pièce moulée en aluminium.

6. Groupe de valves selon l'une quelconque des revendications précédentes, **caractérisé en ce que** les valves (1, 2, 3) des canaux d'usagers présentent chacune un siège étanche formé sur un orifice du bloc de valves (9) et un corps de fermeture reçu de manière mobile dans l'orifice, ledit corps de fermeture étant raccordé par une tige d'actionnement à un entraînement de valves monté sur une surface externe du bloc de valves.

7. Groupe de valves selon l'une quelconque des revendications précédentes, **caractérisé en ce que** la valve de dérivation (4) présente un siège étanche formé sur un orifice du bloc de valves et un corps de fermeture qui est reçu de manière mobile dans l'orifice et est raccordé par une tige d'actionnement à un entraînement de valves monté sur une surface externe du bloc de valves (9).

8. Groupe de valves selon l'une quelconque des revendications précédentes, **caractérisé en ce que** les valves présentent des entraînements de valves électromagnétiques.

9. Groupe de valves selon la revendication 8, **caractérisé en ce que** les entraînements de valves peuvent être actionnés par un pilotage à impulsions.

10. Groupe de valves selon l'une quelconque des revendications précédentes, **caractérisé en ce que** les canaux d'usagers débouchent, sur plusieurs surfaces externes du bloc de valves de forme parallélépipédique, dans des ouvertures de raccordement qui, en cas de besoin, sont fermées par des brides aveugles ou pourvues de raccords de tuyaux.
